# EUROPEAN PATENT SPECIFICATION

(11) **EP 3 464 720 B1**
(45) Date of publication and mention of the grant of the patent: **17.03.2021**
(21) Application number: 17729806.4
(22) Date of filing: 26.05.2017
(51) Int. Cl.: D21H 19/58, B41M 5/337, B41M 5/52, D21H 19/60, C09D 133/06, C09D 133/08, C09D 133/10, C09D 201/02, C09D 201/08

(54) **ADDITIVE FOR COATING COMPOSITION**
ADDITIV FÜR BESCHICHTUNGSZUSAMMENSETZUNG
ADDITIF POUR COMPOSITION DE REVÊTEMENT

(30) Priority: 02.06.2016 DE 102016110218
(43) Date of publication of application: 10.04.2019
(73) Proprietor: Baumeister Chemicals & Consulting GmbH & Co. KG, 86167 Augsburg (DE)
(72) Inventor: BAUMEISTER, Manfred, 86153 Augsburg (DE); BAUMEISTER, Christoph, 86316 Friedberg (DE)
(74) Representative: Wittmann, Ernst-Ulrich
(86) International application number: PCT/EP2017/062774
(87) International publication number: WO 2017/207438

(56) References cited:
- EP-A1- 0 575 625
- WO-A2-2008/073412
- US-A- 4 661 540
- US-A- 4 738 726

## Description

### Field of the Invention

The present invention relates to coatings for paper products, in particular coatings that contain a pigment, and can be used to coat a fibre substrate product. The present invention relates in particular to an improved additive for use in the coating composition. Compositions according to the present invention are particularly useful in Gravure printing processes.

### Background to the Invention

Coating compositions for the manufacture of coated printing media are known. The coating compositions typically comprise a pigment and binders, as well as additives, which form a slurry in water. This type of coating composition is used to manufacture coated paper for the well-known Gravure printing process.

The Gravure printing process commonly makes use of very wide and heavy material rolls. Unwinding of wide and large diameter rolls constitutes a major problem as due to the tension and gravity induced deflection of the roll core excessive shift of paper layers close to the core occurs. As a result so called core wrinkling and core bursts appear leading to breaks on the printing machine. This problem can be solved by improving interlayer adhesion due to static electricity build up. Accidentally it has been found that the usage of talc as a coating pigment decreases conductivity of the coating layer and contributes to increased static charge build up. However, talc is both an expensive pigment and difficult to process in an ordinary paper mill environment. Technical solutions which will contribute to easier processability and improved gravure roll construction are therefore highly desirable.

Another consideration for the production of coated paper products is that it is desirable for the coating compositions to have a high solids content. The reasons for this are that a high solids content allows excellent results to be achieved in terms of the appearance of the paper product, allows energy savings during drying and saves on the quantity of binder in the coating composition. A related consideration is that using larger or coarser pigments is advantageous as these tend to be less expensive than finer pigments.

However, an increase in the solids content inevitably leads to a decrease in particle stability and can result in pigment particles agglomerating within the slurry. If agglomerates have formed in the coating composition process problems during production of the coated sheet arise. Especially detrimental to a saleable product quality are streaks during coating application which appear due to the presence of agglomerates.

As well as a high solids level, particular additives also contribute to the formation of pigment aggregates. In particular, for the production of bright white coated paper, optical brighteners are used. A very popular and effective carrier for optical brighteners currently in use is polyvinyl alcohol (PVOH). Indeed, PVOH is almost indispensable in the manufacture of bright white coated paper.

However, PVOH can interact with other components of the coating to lead to a much higher incidence of agglomeration of the pigment. In particular, it is thought that at pH levels of 7 and above, the hydroxyl groups of the PVOH can interact with carboxyl groups.

Several attempts have been made in the past to address the problems of too rapid static charge dissipation and pigment agglomeration in the coating colour. WO2011/054655 discloses a stabilizing additive consisting of a blend of high and low molecular weight polyethyleneoxides.

Polyethylenoxides in general all polyethers interact with polycarboxylates which are the state of the art products to stabilize paper coating pigments. However, the polyethers described in WO2011/054655 are much lower molecular weight products as the polyvinylalcohols in the viscosity range of 5.5 to 8 mPa.s commonly used in the paper industry and act as polymeric stabiliziers. The interaction of the polyethers with polycarboxylic acids immobilizes the sodium ions present as counter ions of the polycarboxylate and results in a greatly reduced conductivity of the coated product, such helping static charge preservation of the coated product. However to obtain the desired effect relatively large quantities of the polyether must be added to the coating formulation, minimal 0.6 pph dry material on pigment, making this solution relatively expensive. A solution where a much smaller addition range would produce similar effects and also contribute to improved process stability is highly desirable.

WO2014/009304 attempts to address similar challenges, and discloses that low molecular weight polycarboxylates have been used as dispersing or stabilising agents for the pigment. However, it is said that interaction of PVOH with these dispersing or stabilising agents can prevent them from stabilising the pigment, leading to thus pigment agglomeration. It has been found that a new type of polycarboxylate fulfils the before mentioned requirements. Conventional polycarboxylates used as dispersing or stabilizing agents are prepared by polymerising carboxylic acids like acrylic-, methacrylic-, fumaric or maleic acid in the presence of a chain transfer agent followed by neutralization mostly with sodium or potassium hydroxide. As chain transfer agents alcohols like isopropanol are frequently used or mercaptanes like 3-mercaptopropionic acid. It has now been found that certain hydroxyalkyl amines like 2-Monoisopropanolamine allow to produce novel, extremely low molecular weight polycarboxylates with primary amino groups as chain terminating groups and protonated hydroxylalkyl amines as counter ions.

Accordingly WO2014/009304 propose a different type of additive as a stabilizer. In particular an additive consisting of substituted ethylene unites with carboxyl side groups esterified with amines and polyethers can be employed.

EP0575625 A1 describes a process for producing copolymer latex by the emulsion polymerization of an aliphatic conjugated diene monomer and another monomer copolymerizable therewith in the presence of a cyclic unsaturated hydrocarbon having one unsaturated bond in the ring, wherein a monomer mixture containing the diene monomer and another monomer mixture free from the diene monomer are added.

US4661540 A describes an aqueous dispersion of a tertiary amine terminated polyether and a carboxylic acid functional polymer. The tertiary amine terminated polyether is the product of the reaction of the epoxy group of an epoxy resin with the hydroxy group of a hydroxy functional tertiary amine and the carboxylic acid functional polymer is present in an amount sufficient to render the combination water dispersible.

US4738726 A describes a highly bulked kaolin pigment prepared by mixing a small but effective amount of a water-soluble cationic polyelectrolyte flocculant with a kaolin clay pigment in the presence of water to prepare a bulked clay pigment product. Upon dewatering, the resultant polyelectrolyte treated clay product can be dispersed to form high solids clay-water slurries useful in making aqueous coating colors suitable for manufacturing coating lightweight publication papers or the pigment can be used as a filler for paper webs.

WO2008073412 A2 describes a polymer dispersant for pigments based on a graft copolymer wherein the graft copolymer has a weight average molecular weight of at least 3000 and has 10% to 90% by weight of a polymeric backbone and 90% to 10% by weight of macromonomer side chains attached to the polymeric backbone and wherein at least 20% by weight of the polymeric backbone has attached thereto an amide group which serves as a pigment anchoring group.

The stabilising additives disclosed in the prior art can help reduce the challenges associated with the production of coated paper products including rapid charge dissipation and pigment agglomeration, but not as much as is desired. Accordingly, there is a need in the art to improve further the coating compositions in order to improve the efficiency of the printing processes. There is also an ongoing need in this industry to reduce the costs of the components in the coating compositions.

### Summary of the Invention

According to a first aspect, the present invention relates to a composition comprising: (a) at least one pigment; (b) at least one binder including polyvinylalcohol; and (c) an additive, wherein the additive is a polyelectrolyte with a backbone that comprises ionisable carboxylate groups, the polyelectrolyte having amine functional groups at at least some of the terminals, and wherein the polyelectrolyte has an average molecular weight in the region of 500 to 4000 Daltons as determined by the Ostwald method using a capillary viscometer, wherein the additive is obtained by polymerising acrylic acid, methacrylic acid, fumaric acid, itaconic acid, maleic acid or a mixture thereof, in the presence of a hydroxyalkyl amine; and wherein the hydroxyalkyl amine comprises monoisopropanolamine, aminomethyl propanol, ethanolamine, diethanolamine, or triethanolamine, preferably wherein the hydroxyalkyl amine is monoisopropanolamine.
The present invention provides an entirely new type of additive. In particular, it relates to a polyelectrolyte with a backbone that comprises ionisable carboxylate groups, but wherein the polyelectrolyte additionally has amine functional groups most of them terminal. Surprisingly the inventors have found that by using these types of additives in the composition for coated paper products, the composition is more stable, more robust, less likely to agglomerate, and has a low shear viscosity, which means the efficiency of the coating process can be improved. Furthermore, the composition including this additive can incorporate high solids levels and relatively coarse pigments, leading to cost savings compared to prior state of the art coating compositions.

Without wishing to be bound by theory, it seems that the additives of the present invention become adsorbed on the pigments via the amine functional group. As this is at a terminal, the body of the polymer with the backbone of ionisable carboxylate groups extends away from the pigment. In solution, it is thought that the backbone with multiple carboxylate ions forms an ionically crosslinked structure and works like a bristle to provide excellent steric stabilisation. If pigment particles with adsorbed additive approach each other, the extended polymer chains act as spacers, and prevent the particles from approaching each other closely enough for van der Waals forces to become effective.

This is in contrast to prior art stabilisers which are thought to work in a different and ultimately less effective way. In particular, the nonionic polymers with amine groups incorporated into the side chains are thought to act as steric stabilisers due to the projection of the polyethylenoxide side chains into the aqueous phase. Conventional polycarboxylates are thought to organise themselves in a flat configuration on the pigment surface, leading to a very thin adsorption layer, which is below the thickness needed to prevent the attractive van der Waal forces forming agglomerates, especially at high solids levels.

According to a preferred embodiment of the invention, the additive is according to Formula I:

R¹(CHR²CR³(COOH))ₙR⁴ Formula I

wherein R² is H or COOH, R³ is H, a C₁ to C₆ branched or straight chain alkyl, CH₂COOH or COOH, R¹ and R⁴ are each independently -OR⁵N(R⁶)₂, wherein R⁵ is a C₁ to C₆ branched or straight chain alkyl and each R⁶ is independently H or a C₁ to C₆ branched or straight chain alcohol, and n is 10 to 40.

It can be seen that additives according to this formula have a high charge density in solution, so act as very effective steric stabilisers.

According to a second aspect, the invention relates to the use of a composition according to the first aspect of the invention to coat a paper product specifically designed for the Gravure printing process.

According to a third aspect, the present invention relates to a method of printing a Paper product in a Gravure printing process, the method involving the steps of:
- Providing a composition to any of claims 1 to 7
- Applying the composition by means of a roll or jet applicator system to a paper product
- Metering the applied coating by means of a blade or metering rod
- Applying ink with an engraved printing cylinder
- Drying the printed image with hot air

Said method imparting surface properties of the paper product allowing production of wide, large diameter paper product rolls, without wrinkles and core bursts.

### Description

The present invention relates to a composition, which is particularly well suited to being used as a coating for printing paper products, especially but not exclusively in a Gravure printing process.

The composition of the present invention comprises at least one pigment. Suitable pigments are known by the skilled person. The pigments used in the present invention are typically selected from the group consisting of kaolin (clay), natural calcium carbonate (for example ground calcium carbonate, which can be referred to as GCC), precipitated calcium carbonate (which can be referred to as PCC), talc, calcium sulphate, titanium dioxide, aluminium trihydrate, barium sulphate, synthetic pigments, or mixtures thereof. An advantage of the present invention is that it enables less expensive pigments, such as GCC to be used rather than more expensive pigments such as talc. Indeed, GCC is preferably used as the pigment. Preferably the pigments are largely free from impurities and have a uniform particle size and distribution, and good solubility. Kaolin and/or GCC are particularly preferred pigments of the present invention.

In addition to the solid pigment, and other solid components, the composition of the present invention generally additionally comprises a solvent, usually water, so that the composition is in the form of a slurry of solids in water. Despite this, it is customary to perform calculations of the level of each individual solid component in the dispersion based on the level of pigment, which is the major solid component. As set out below, the level of other solids is given based on 100 parts by weight of the pigment. The other solid component (binder and additives etc.) usually in total comprises around 5 to 15 parts based on 100 parts of pigment.

By adding a given amount of solvent (usually water) to achieve the desired characteristics for the composition, the proportion of solids vs solvent is given in weight %. In a preferred embodiment the solvent is water, preferably wherein the composition is in the form of a slurry of solids in water. In a preferred embodiment of the present invention, the composition has a solids content of at least 70%, preferably 70 to 80%, more preferably 71 to 74%. As set out above, such a high solids level is advantageous, as it means that less energy is expended in drying the composition, leading to a more economical printing process. A high solids level can be achieved using the additives of the present invention as steric stabilisers to largely prevent agglomeration.

The composition of the present invention also comprises at least one binder. In the present invention the binder includes polyvinyl alcohol (PVOH), which is also an optical brightener. This is important because while PVOH is a very advantageous component of the composition in that it enables bright white colours to be achieved, in prior art compositions it has caused undesirable agglomeration to occur. Using the additive in the composition of the present invention PVOH can be incorporated without pigment agglomerate occurring, which represents a significant benefit of the present invention. The PVOH is preferably of low viscosity, and in particular can be in the range of 5 to 8 mPa.s as a 4%-solution.

Other binders that can be included along with PVOH are polyvinyl acetates, polyacrylate emulsions, polyethylene glycols, starch, carboxymethyl cellulose (CMC), styrene-butadiene, gelatine, casein, hydroxyethyl cellulose, proteins, alginates, cellulose derivatives, acrylic acid ester-styrene, acrylic acid ester-vinyl acetate, copolymers of acrylic acid with acrylonitrile, vinyl acetate copolymers, vinyl acetate-ethylene copolymers, latex, and mixtures thereof. Latex is commonly used as a binder in combination with PVOH. Latex is useful as a binder for keeping the solids levels up, as it can be provided in the form of a dispersion with a solids level of over 50%. "Latex" is the name given in the art to synthetic binder emulsions.

The binder is typically present at a level of 3.0 to 15 parts per 100 parts of pigment, preferably 4 to 10 parts per 100 parts of pigment. The PVOH is preferably included as a minor component in binder, and can be present at levels of 0.5 to 2.5 parts per 100 parts of binder. As above, it is usually used in combination with a synthetic binder emulsion.

The present invention is concerned with compositions that include a new and advantageous additive. The additive is thought to act as a steric stabiliser. The additive is a polyelectrolyte with a backbone that comprises ionisable carboxylate groups. By this we mean that the polymer has multiple side chains including a carboxylic acid functional group -COOH. In solution the hydrogen cation H⁺ dissociates leaving the carboxylate anion -COO⁻. Usually the polymer has regularly repeating carboxylate side chains, occurring every 1 to 6 carbon atoms along the backbone, so that the polymer has a high charge density. In preferred embodiments of the present invention, the carboxylate groups occur as a side chain on every single or every other carbon of the backbone giving a very high charge density.

The polyelectrolyte also has amine functional groups at at least some of the terminals. By this we mean that at least one of the ends of the polymer terminates with a group that includes an amine functional group. The amine can be a primary amine (-NH₂), a secondary amine (-NHR), or a tertiary amine (-NR₂), and is preferably a primary amine. It is important to have an amine group at the end of the polymer additive, as this is thought to adsorb onto a mineral pigment. Having the amine group at the terminal is thought to result in a different type of adsorption than when the amine is in a side chain, with main portion, the backbone, of the additive extending away from the pigment rather than lying flat along the pigment, resulting in more effective steric stabilisation.

Relative molecular weight of the new polymer was determined according to the Ostwald method by using a capillary viscometer. A commercial polyacrylate dispersant Indunal NHS with an average molecular weight of 4500 Daltons was used as a reference. By comparing viscosities of the two products a molecular weight of about 1200 Daltons could be determined for the novel polymer.

According to a preferred embodiment, the additive of the present invention is according to Formula I:

R¹(CHR²CR³(COOH))ₙR⁴ Formula I

wherein R² is H or COOH, R³ is H, a C₁ to C₆ branched or straight chain alkyl, CH₂COOH or COOH, R¹ and R⁴ are each independently -OR⁵N(R⁶)₂, wherein R⁵ is a C₁ to C₆ branched or straight chain alkyl and each R⁶ is independently H or a C₁ to C₆ branched or straight chain alcohol, and n is 10 to 40. This additive has a very high charge density with carboxyl groups at every or every other carbon in the backbone, and has an amine functional group at each end. Compounds according to this formula perform very well as steric stabilisers for pigments in the coating composition of the invention.

It is particularly preferred that R² is H, R³ is H or CH₃, R¹ and R⁴ are each independently -OR⁵N(R⁶)₂, wherein R⁵ is a C₁ to C₆ branched or straight chain alkyl and each R⁶ is H.

According to a further preferred embodiment, the additive is obtained by polymerising acrylic acid, methacrylic acid, fumaric acid, itaconic acid, maleic acid or a mixture thereof, in the presence of a hydroxyalkyl amine. Acrylic acid-based polymers are particular preferred. The hydroxyalkyl amine preferably comprises monoisopropanolamine, aminomethyl propanol, ethanolamine, diethanolamine, or triethanolamine, preferably wherein the hydroxyalkyl amine is monoisopropanolamine. The hydroxyalkyl amine acts as both a neutralising agent for the acid, and a chain transfer agent during polymerisation. In a preferred embodiment of the invention there is an excess of the hydroxyalkyl amine. This allows this component to both act as a chain transfer agent and a neutralising agent. Preferably the composition comprises enough hydroxyalkyl amine present to neutralize all the carboxylate groups on the additive. Indeed, it is more preferred that there is a 20-40% excess of hydroxyalkyl amine in relation to the carboxylate groups, so that even after all the carboxylate groups have been neutralized, there is still 20 to 40% residual hydroxyalkyl amine in the reaction mixture.

The additive of the present invention is very effective and works at surprisingly low levels. In a preferred embodiment, the additive is present at a level of 0.1 to 1.5, preferably 0.2 to 1.5, or 0.2 to 0.5 parts by weight per 100 parts of pigment. The pH of the composition can affect the agglomeration, as described earlier. It is preferred that the composition of the present invention has a pH in range of 7.5 to 10.0.

The composition of the invention can also comprise other components, such as optical brighteners (in addition to PVOH), dyes, rheology aids, dispersants, plasticisers, thickeners, deaerators, defoamers, pH regulators, biocides, or the like.

As set out above, the composition of the present invention is particularly suitable for coating paper or a paper product. By paper product we mean paper, cardboard, or any other medium that can be used in a printing process and be coated by the composition of the present invention. The coating composition can be used in any type of printing process, including inkjet printing, laser printing, screen printing, relief printing, or offset printing, but if preferably used in Gravure printing.

In more detail, the method of printing on a paper product in a Gravure printing process involves the steps of: providing a composition according to the present invention; by applying the composition by means of a roll or jet applicator system to a paper product; metering the applied coating by means of a blade or metering rod; applying ink with an engraved printing cylinder; drying the printing image with hot air. The excess coating is metered off with the blade or metering rod system. The coated product is subjected to calendering to further increase smoothness of the coated sheet. A high smoothness is a fundamental prerequisite to obtain good ink transfer from the engraved printing cells onto the coated sheet.

Gravure printing is an example of intaglio printing. It uses a depressed or sunken surface in an engraved cylinder to create an image. The image areas consist of cells or wells that are chemically etched or mechanically engraved into a cylinder (usually copper), called the engraved cylinder. The unetched areas of the cylinder represent the non-image or unprinted areas. Usually a 70 to 100 screen is used. This means in the case of a 70 screen, 4900 printing cells with varying depth are located within one cm².

To transfer ink from the recessed cells, the cylinder normally rotates in an inkbath. As the engraved cylinder turns, the excess ink is wiped off the cylinder by a flexible steel doctor blade. The ink remaining in the recessed cells forms the image by direct transfer to the substrate (paper product) as it meets the substrate passing between the engraved cylinder and an impression cylinder. In order to provide complete ink transfer, the substrate should be very smooth and elastic, so as to establish physical contact between each individual cell and the substrate.

Accordingly, ink for use in Gravure printing processes needs to have a low viscosity that allows them to be drawn into the engraved cells in the cylinder then transferred onto the substrate.

Gravure printing is characteristically used for long run, high quality printing producing a sharp, fine image so is especially suited for high volume printing, like cataloques, and mass circulation magazine. Web-fed gravure presses account for almost all publication, packaging, and product gravure printing. These presses are generally custom manufactured machines designed for a specific range of products. The typical press is highly automated and consists of multiple print units. The printing mechanism in a rotogravure press consists of a gravure cylinder and a smaller, rubber clad impression cylinder.

### Example 1

According to a preferred embodiment of the invention, by way of example only, the additive is made by polymerising acrylic acid in the presence of monoisopropanolamine. A synthetic example outlining this is as follow.

To a multi-necked flask was added 104 g monoisopropanolamine, 95.7 g acrylic acid and 103.6 g of deionized water. The mixture was heated with stirring to 70 °C.

A solution of 0.3 g of the initiator WAKO V 50 (2-2'-Azobis (2-methylpropionamidine) dihydrochloride) in 30 g of water was added drop wise, with the addition rate being adjusted so that the temperature is maintained at 70 ° C by the exothermic reaction. The addition continued for about 15-20 min, and then stopped. The mixture was then held at 70 ° C for about 120 minutes.

After cooling, a yellowish clear liquid was obtained with a Brookfield viscosity of about 100 mPa.s at 50 / min. and a dry solids level of 60%.

### Example 2

### Gravure coating formulation

| | 1 | 2 | 3 |
|---|---|---|---|
| Delaminated clay ² | 70 | 70 | 50 |
| GCC 75% < 2 µm³ | 30 | 30 | 50 |
| Sterocoll ST ¹ | 0.2 | 0.2 | 0.2 |
| Polyether aminopolyacrylate ⁴ | 0.6 | 0.25 | 0.40 |
| SB-Latex | 3.8 | 3.8 | 3.8 |
| PVOH 5-88 | 0.4 | 0.4 | 0.4 |
| Dry solids % | 60 | 60 | 67 |
| Brookfieldviscosity 50/min mPa.s | 520 | 450 | 550 |
| High shear viscosity 40000 sec⁻¹ mPa.s | 45 | 37 | 43 |
| Discharge time ⁵ sec | 0.9 | 1.2 | 1.0 |
| Smoothness Bekk sec | 1200 | 1350 | 1500 |

| | | | |
|---|---|---|---|
| ¹ Sterocoll ST alkali swellable thickener BASF ² delaminated clay Sprint III AKW ³ GCC ground calcite ⁴ polyether product listed in WO 2011/054655 ⁵ discharge time of paper if surface charge of 250 V is applied. | | | |

### Example 3

### Offset formulation

| | 1 | 2 |
|---|---|---|
| Capim DG | 20 | |
| GCC 95% < 2µm | 80 | 100 |
| PVOH 5-88 | 0.5 | 0.5 |
| Sterocoll ST | 0.1 | 0.1 |
| Aminopolyacrylat | | 0.3 |
| SB-Latex | 8.0 | 6.5 |
| Dry solids % | 70 | 73 |
| η/50/min | 600 | 750 |
| η/40000 sec⁻¹ mPa.s | 45 | 43 |
| Coat weight g/m² | 12 | 11.5 |
| Gloss TAPPI 75° | 65 | 68 |

## Claims

1. A composition comprising:
(a) at least one pigment;
(b) at least one binder including polyvinylalcohol; and
(c) an additive, wherein the additive is a polyelectrolyte with a backbone that comprises regularly repeating ionisable carboxylate groups occurring every 1 to 6 carbon atoms along the backbone, wherein at least one end of the polyelectrolyte terminates with a group that includes an amine functional group, wherein the additive is present at a level of 0.1 to 1.5 parts per 100 parts of pigment by weight, and wherein the polyelectrolyte has an average molecular weight in the region of 500 to 4000 Daltons as determined by the Ostwald method using a capillary viscometer,
wherein the additive is obtained by polymerising acrylic acid, methacrylic acid, fumaric acid, itaconic acid, maleic acid or a mixture thereof, in the presence of a hydroxyalkyl amine; and
wherein the hydroxyalkyl amine comprises monoisopropanolamine, aminomethyl propanol, ethanolamine, diethanolamine, or triethanolamine, preferably wherein the hydroxyalkyl amine is monoisopropanolamine.

2. The composition according to claim 1, wherein the additive is according to Formula I:
R¹(CHR²CR³(COOH))ₙR⁴ Formula I
wherein R² is H or COOH,
R³ is H, a C₁ to C₆ branched or straight chain alkyl, CH₂COOH or COOH,
R¹ and R⁴ are each independently -OR⁵N(R⁶)₂, wherein R⁵ is a C₁ to C₆ branched or straight chain alkyl and each R⁶ is independently H or a C₁ to C₆ branched or straight chain alcohol, and
n is 10 to 40.

3. The composition according to claim 2, wherein:
R² is H,
R³ is H or CH₃, and
R¹ and R⁴ are each independently -OR⁵N(R⁶)₂, wherein R⁵ is a C₁ to C₆ branched or straight chain alkyl and each R⁶ is H.

4. The composition according to claim 1, wherein the composition comprises enough free hydroxyalkyl amine to neutralize all the carboxylate groups on the additive.

5. The composition according to any preceding claim, wherein the composition additionally comprises water, preferably wherein the composition is in the form of a slurry of solids in water.

6. The composition according to claim 5, wherein the slurry has a solids content of at least 70%, preferably wherein the slurry has a solids content of 70 to 80% preferably 71 to 74%.

7. The composition according to any preceding claim, which has a pH in range of 7.5 to 10.

8. Use of a composition according to any preceding claim, to coat a paper product.

9. Use of a composition according to claim 8 to coat a paper product specifically designed for the Gravure printing process.

10. A method of printing a paper product in a Gravure printing process, the method involving the steps of:
• providing a composition to any of claims 1 to 7
• applying the composition by means of a roll or jet applicator system to a paper product
• metering the applied coating by means of a blade or metering rod
• applying ink with an engraved printing cylinder
• drying the printed image with hot air.

## Patentansprüche

1. Eine Zusammensetzung, umfassend:
(a) mindestens ein Pigment;
(b) mindestens ein Bindemittel, das Polyvinylalkohol enthält; und
(c) ein Additiv,
wobei das Additiv ein Polyelektrolyt mit einem Rückgrat ist, das regelmäßig wiederkehrende ionisierbare Carboxylatgruppen umfasst, die alle 1 bis 6 Kohlenstoffatome entlang des Rückgrats auftreten,
wobei mindestens ein Ende des Polyelektrolyts mit einer Gruppe endet, die eine funktionelle Amingruppe enthält,
wobei das Additiv in einer Menge von 1,0 bis 1,5 Teilen pro 100 Gewichtsteile Pigment vorliegt,
und wobei der Polyelektrolyt ein gewichtsmittleres Molekulargewicht im Bereich von 500 bis 4000 Dalton aufweist,
wie durch das Ostwald-Verfahren unter Verwendung eines Kapillarviskosimeters bestimmt wird, wobei das Additiv erhalten wird durch Polymerisation von Acrylsäure, Methacrylsäure, Fumarsäure, Itaconsäure, Maleinsäure oder einer Mischung davon in Gegenwart eines Hydroxyalkylamins; und
wobei das Hydroxyalkylamin Monoisopropanolamin, Aminomethylpropanol, Ethanolamin, Diethanolamin oder Triethanolamin umfasst, wobei vorzugsweise das Hydroxyalkylamin Monoisopropanolamin ist.

2. Zusammensetzung nach Anspruch 1, wobei das Additiv der Formel I entspricht:
R¹(CHR²CR³(COOH))ₙR⁴ Formel I
worin R² H oder COOH ist,
R³ H ist, ein verzweigtes oder geradkettiges C₁- bis C₆-Alkyl, CH₂COOH oder COOH,
R¹ und R⁴ jeweils unabhängig voneinander -OR⁵N(R⁶)₂ sind, worin R⁵ ein verzweigtes oder geradkettiges C₁- bis C₆-Alkyl ist und jedes R⁶ unabhängig voneinander H oder ein verzweigter oder geradkettiger C₁- bis C₆-Alkohol ist, und
n 10 bis 40 ist.

3. Zusammensetzung nach Anspruch 2, worin:
R² H ist,
R³ H oder CH₃ ist, und
R¹ und R⁴ jeweils unabhängig voneinander -OR⁵N(R⁶)₂ sind, worin R⁵ ein verzweigtes oder geradkettiges C₁- bis C₆-Alkyl ist und jedes R⁶ H ist.

4. Zusammensetzung nach Anspruch 1, wobei die Zusammensetzung genügend freies Hydroxyalkylamin umfasst, um alle Carboxylatgruppen auf dem Additiv zu neutralisieren.

5. Zusammensetzung nach einem der vorhergehenden Ansprüche, wobei das Additiv in einer Menge von 0,1 bis 1,5 Teilen pro 100 Gewichtsteile Pigment vorliegt.

6. Zusammensetzung nach Anspruch 5, wobei die Aufschlämmung einen Feststoffgehalt von mindestens 70 % aufweist, wobei die Aufschlämmung vorzugsweise einen Feststoffgehalt von 70 bis 80 %, vorzugsweise von 71 bis 74 % aufweist.

7. Zusammensetzung nach einem der vorhergehenden Ansprüche, die einen pH-Wert im Bereich von 7,5 bis 10 aufweist.

8. Verwendung einer Zusammensetzung nach einem der vorhergehenden Ansprüche, um ein Papierprodukt zu beschichten.

9. Verwendung einer Zusammensetzung nach Anspruch 8 zum Beschichten eines Papierprodukts, das speziell für das Tiefdruckverfahren ausgelegt ist.

10. Verfahren zum Bedrucken eines Papierprodukts in einem Tiefdruckverfahren, wobei das Verfahren die folgenden Schritte beinhaltet:
• Bereitstellen einer Zusammensetzung nach einem der Ansprüche 1 bis 7
• Aufbringen der Zusammensetzung mittels eines Walzen- oder eines Düsenauftragwerkes auf ein Papierprodukt
• Dosierung der aufgetragenen Beschichtung mittels eines Rakels oder eines Dosierstabs
• Auftragen von Druckfarbe mit einem gravierten Druckzylinder
• Trocknen des Druckbildes mit Heißluft.

## Revendications

1. Composition comprenant :
(a) au moins un pigment ;
(b) au moins un liant comportant de l'alcool polyvinylique ; et
(c) un additif, dans laquelle l'additif est un polyélectrolyte avec une liaison qui comprend la répétition régulière de groupes de carboxylate ionisables survenant tous les 1 à 6 atomes de carbone le long de la liaison, dans laquelle au moins une extrémité du polyélectrolyte se termine par un groupe qui comporte un groupe d'aminé fonctionnel, dans laquelle l'additif est présent à un niveau de 1,0 à 1,5 parties par 100 parties de pigment en poids, et dans laquelle le polyélectrolyte possède un poids moléculaire moyen dans la zone de 500 à 4000 Daltons tel que déterminé par la méthode Ostwald en utilisant un viscosimètre capillaire, dans laquelle l'additif est obtenu par polymérisation d'acide acrylique, d'acide méthacrylique, d'acide fumarique, d'acide itaconique, d'acide maléique ou d'un mélange de ceux-ci, en présence d'hydroxyalkyle-amine ; et
dans laquelle l'hydroxyalkyle-amine comprend de la monoisopropanolamine, de l'aminométhyl-propanol, de l'éthanolamine, de la diéthanolamine, ou de la triéthanolamine, de préférence dans laquelle l'hydroxyalkyle-amine est de la monoisopropanolamine.

2. Composition selon la revendication 1, dans laquelle l'additif est selon la formule I :
R¹(CHR²CR³(COOH))ₙR⁴ Formule I
dans laquelle R² est du H ou du COOH,
R³ est du H, un alkyle à chaîne ramifiée ou droite C₁ à C₆, du CH₂COOH ou du COOH,
R¹ et R⁴ sont chacun indépendamment du -OR⁵N(R⁶)₂, dans laquelle R⁵ est un alkyle à chaîne ramifiée ou droite C₁ à C₆ et chaque R⁶ est du H ou un alcool à chaîne ramifiée ou droite C₁ à C₆, et
n est de 10 à 40.

3. Composition selon la revendication 2, dans laquelle
R² est du H,
R³ est du H ou du CH₃, et
R¹ et R⁴ sont chacun indépendamment du -OR⁵N(R⁶)₂, dans laquelle R⁵ est un alkyle à chaîne ramifiée ou droite C₁ à C₆ et chaque R⁶ est du H.

4. Composition selon la revendication 4, dans laquelle la composition comprend assez d'hydroxyalkyle-amine libre pour neutraliser tous les groupes de carboxylate sur l'additif.

5. Composition selon une quelconque des revendications précédentes, dans laquelle la composition comprend en outre de l'eau, de préférence dans laquelle la composition est sous la forme d'un coulis de solides dans de l'eau.

6. Composition selon la revendication 5, dans laquelle le coulis possède une teneur en solides d'au moins 70 %, de préférence dans laquelle le coulis possède une teneur en solides de 70 à 80 %, de préférence de 71 à 74 %.

7. Composition selon une quelconque des revendications précédentes qui possède un pH dans la plage de 7,5 à 10.

8. Utilisation d'une composition selon une quelconque des revendications précédentes afin d'enduire un produit en papier.

9. Utilisation d'une composition selon la revendication 8 afin d'enduire un produit en papier conçu spécifiquement pour le procédé de tirage en héliogravure.

10. Méthode d'impression d'un produit en papier à un procédé de tirage en héliogravure, la méthode comportant les étapes de :
• fourniture d'une composition selon une quelconque des revendications 1 à 7
• application de la composition au moyen d'un système à rouleau ou à applicateur de jet sur un produit en papier
• mesure de l'enduction appliquée au moyen d'une lame ou d'une barre de mesure
• application d'encre avec un cylindre d'impression gravé
• séchage de l'image imprimée à l'air chaud.
